Europäisches Patentamt

(19) European Patent Office

Office européen des brevets

(11) Veröffentlichungsnummer: **0 138 094**
**B1**

(12) # EUROPÄISCHE PATENTSCHRIFT

(45) Veröffentlichungstag der Patentschrift:
04.01.89

(51) Int. Cl.⁴: **F 25 B 49/00**

(21) Anmeldenummer: **84111233.7**

(22) Anmeldetag: **20.09.84**

(54) **Kälteanlage.**

(30) Priorität: **01.10.83 DE 3335837**

(43) Veröffentlichungstag der Anmeldung:
**24.04.85 Patentblatt 85/17**

(45) Bekanntmachung des Hinweises auf die Patenterteilung:
**04.01.89 Patentblatt 89/1**

(84) Benannte Vertragsstaaten:
**AT BE DE IT**

(56) Entgegenhaltungen:
**EP-A-0 069 996**
**DE-A-3 129 410**
**FR-A-2 222 616**
**GB-A-2 038 036**
**US-A-2 260 682**
**US-A-2 350 408**
**US-A-3 074 619**
**US-A-4 112 703**
**US-A-4 459 819**

(73) Patentinhaber: **Asea Brown Boveri Aktiengesellschaft, Kallstadter Strasse 1, D-6800 Mannheim- Käfertal (DE)**

(72) Erfinder: **Frank, Dieter, Dipl.- Ing., Ottweiler Strasse 29, D-6700 Ludwigshafen (DE)**

(74) Vertreter: **Kempe, Wolfgang, Dr., c/o BROWN, BOVERI & CIE AG ZPT Postfach 351, D-6800 Mannheim 31 (DE)**

EP 0 138 094 B1

## Beschreibung

Die Erfindung bezieht sich auf eine Kälteanlage gemäß dem ersten Teil des Anspruchs 1.

Zur Erzeugung der erforderlichen Kühlleistung sind Kälteanlagen Bestandteil von Klimaanlagen bzw. Luftkühlanlagen.

Es sind Kälteanlagen mit einem thermostatischen Expansionsventil zur Regelung der Überhitzung des Kältemittels am Austritt aus dem Verdampfer bekannt geworden. Verdampferleistung und Überhitzung sind voneinander abhängig. Bei zu großer Überhitzung vermindert sich die übertragbare Leistung am Verdampfer. Es soll einerseits eine möglichst hohe Ausnutzung des Verdampfers, d.h. eine nur geringe Überhitzung erreicht werden; andererseits ist zu verhindern, daß bei zu geringer Überhitzung unverdampftes Kältemittel in den Verdichter gelangt und diesen beschädigt.

Aus der EP-A-0 069 996 ist eine Wärmepumpensteuerung bekannt, bei der ein Druckfühler den Verdampfungsdruck und damit die Verdampfungstemperatur ermittelt. Durch Vergleich mit der gemessenen Temperatur wird die Überhitzung ermittelt, die auf den Antrieb des Verdichters und ein Expansionsventil einwirkt. Bei dieser ortsfesten Anlagen treten die beim Einsatz von Kälteanlagen in Klimaanlagen für Schienenfahrzeuge vorhandenen Schwierigkeiten nicht auf. Bei diesen sind die notwendigen Prüfbedingungen nicht immer gegeben, wie etwa erforderliche Umgebungstemperatur z. B. nachts bei außer Betrieb gesetzten Reisezugwagen oder fehlender Einbeziehung in das Diagnosesystem des Fahrzeuges.

Der Erfindung liegt die Aufgabe zugrunde, bei einer Kälteanlage der eingangs genannten Art die Überhitzungsregelung derart zu verbessern, daß auch von wenig erfahrenem Fachpersonal die Überprüfung und Einreglung möglich ist und die bei Schienenfahrzeugen auftretenden Schwierigkeiten überwunden werden.

Diese Aufgabe wird erfindungsgemäß dadurch gelöst, daß ein in einem Leistungs-Regelkreis des Verdichters vorgesehenes Leistungs-Stellglied gegenüber dem zwischen Verflüssiger und Verteiler des Verdampfers eingeschaltetes Überhitzungsstellglied derart bevorrechtigt geschaltet ist, daß das Leistungsstellglied mit der Steuergröße beaufschlagt wird und erst bei Erreichen des unteren Bereiches der Leistungsbeeinflußung des Verdichters das Überhitzungs-Stellglied die Kälteanlage in Abhängigkeit von den zwischen Verdampfer und Verdichter auf der Saugseite des Verdichters angeordneten Druck- und Temperaturmeßfühlern regelt.

Das Leistungs-Stellglied beeinflußt den elektrischen Antrieb des Verdichters und es ist vorgesehen, daß nach Erreichen der Untergrenze des Stellbereichs das Magnetventil getaktet wird. Durch die Drehzahlsteuerung des Antriebsmotors wird aufgrund der Verminderung des wirksamen Verdichterhubvolumens eine Mindestübersetzung des Kältemittels eingehalten.

Das Leistungs-Stellglied kann auch das Zu- und Abschalten einzelner Zylinder oder bei einzelnen Verdichtern das Zu- und Abschalten einzelner Verdichter jeweils in Abhängigkeit von dem Überhitzungswert steuern.

Der Sollwert der Überhitzung kann im Regler als fester Wert oder variabel abhängig von dem mit dem Druckmeßfühler gemessenen Verdampfungsdruck vorgegeben sein.

Eine zweckmäßige Weiterbildung der Erfindung besteht darin, daß das Magnetventil innerhalb einer vorgegebenen festen oder variablen Taktfrequenz mit variabler Einschaltdauer periodisch öffnet und schließt. Hierdurch kann vom elektronischen Regler die relative Einschaltdauer des Magnetventil variiert werden. Damit wird eine Anpassung an das dynamische Verhalten des die Regelstrecke bildenden Verdampfers erreicht.

Temperaturfühler und Druckmeßfühler können an beliebiger Stelle der Saugleitung zwischen Verdampfer und Verdichter angeordnet werden, so daß z. B. die Wirkung vorhandener Wärmetauscher (Überhitzer) miterfaßt werden kann.

Kälteanlagen bekannter Art sind überlicherweise mit Regeleinrichtungen der Klimaanlage verbunden, die Raumtemperaturen oder Kühllufttemperaturen regeln. Die erfindungsgemäße Überhitzungsregelung kann auf die selben Stellglieder (Magnetventil, Verdichterantrieb usw.) einwirken, wie die Raum- oder Kühllufttemperaturregelung.

Das Einhalten einer Mindestüberhitzung hat dabei Vorrang.

Die mit der Erfindung erzielten Vorteile bestehen insbesondere in einer verbesserten Anpassung der Regelung an das dynamische Verhalten des Verdampfers, d.h. an die Betriebsbedingungen der Kälteanlage, die je nach Witterungsverhältnissen und Besetzung des Fahrzeugs sehr unterschiedlich sein können.

Vorteilhaft ist es insbesondere auch, daß die Regelung der Kälteanlage in eine bereits vorhandene elektronische Regeleinrichtung, vorzugsweise mit einem Mikrorechner, integriert werden kann, wobei die Möglichkeit der verbesserten Überwachung und Prüfung der Kälteanlage genutzt wird.

Die Erfindung wird nachstehend anhand zweier in der Zeichnung dargestellter Kälteanlagen erläutert.

Es zeigt:

Fig. 1    schematisch einen Kältemittel-Kreislauf einer Kälteanlage mit einer Regeleinrichtung und einem Magnetventil als Stellglied;

Fig. 2    das Schema der Kälteanlage nach Fig. 1, bei der erfindungsgemäß als zusätzliches Stellglied der Regeleinrichtung der Antrieb des Kältemittel-Verdichters eingesetzt wird.

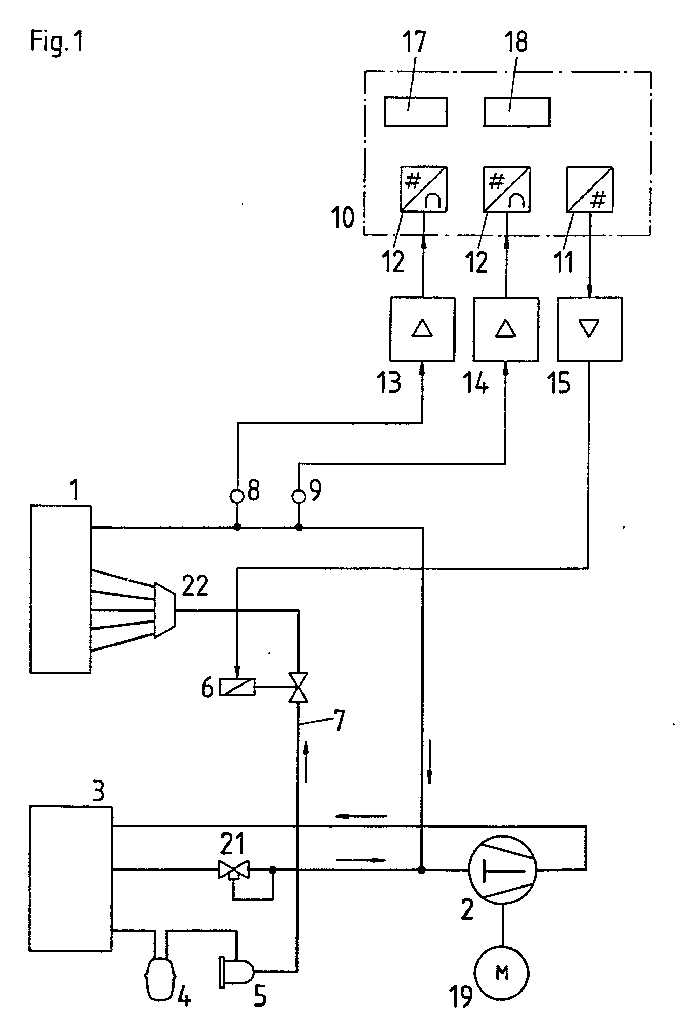

Die Fig. 1 zeigt schematisch den Kältemittel-Kreislauf in einer Kälteanlage. Der Kältemittel-Kreislauf besteht aus:

Verdampfer 1, Verdichter 2, Verflüssiger 3, Sammler 4, Filtertrockner 5, Magnetventil 6 und Verteiler 22; diese Bauelemente sind über Rohrleitungen 7, in denen ein Kältemittel zirkuliert, miteinander verbunden. Außerdem ist ein Heißgas-Bypass-Regler 21 vorgesehen, der den Betrieb des Verdichters bei geschlossenem Magnetventil 6 erlaubt, so daß das Takten, periodisches Öffnen und Schließen des Magnetventils 6 möglich ist, ohne gleichzeitig den Verdichter 2 aus- und einzuschalten. In der Kältemittelansaugleitung zwischen dem Verdampfer 1 und dem Verdichter 2 sind ein Druckmeßfühler 8 und ein Temperaturmeßfühler 9 angeordnet, die über Meßumformer 13, 14 und diesen nachgeschteten Analog-Digital-Umsetzern 12 mit einem Mikrorechner-Regler 10 verbunden sind, während über einen Digitalausgang 11 mit nachgeschaltetem Leistungsverstärker 15 das Magnetventil 6 von dem Mikrorechner-Regler angesteuert wird, das als Stellglied dient.

Die Kälteanlage arbeitet wie nachfolgend beschrieben. Der über einen elektrischen Antrieb 19 angetriebene Verdichter 2 saugt in einem geschlossenen Kreislauf den Kältemitteldampf (Kältemittel) an und verdichtet ihn. Anschließend wird der verdichtete Kältemitteldampf im Verflüssiger 3 so stark gekühlt, daß er verflüssigt. Das verflüssigte Kältemittel strömt über das Magnetventil 6 dem nachgeschalteten Verteiler 22 zu, wo es vom Verflüssigungsdruck auf den Verdampfungsdruck entspannt wird. Mit diesem Druck tritt es in den Verdampfer 1 ein und verdampft hier; gleichzeitig entzieht es der abzukühlenden Zuluft Wärme. Diese Wärmeaufnahme stellt die Kälteleistung dar. Aus dem Verdampfer 1 wird der Kältemitteldampf wieder vom Verdichter 2 angesaugt, womit sich der Kreislauf schließt.

Eine vorgegebene Überhitzung des Kältemittels am Austritt aus dem Verdampfer soll durch Steuern der Durchflußmenge in bestimmten Grenzen eingehalten werden. Da mit wird einerseits eine optimale Ausnutzung des Verdampfers erreicht und andererseits verhinder, daß unverdampftes Kühlmittel in den Verdichter gelangt und diesen beschädigt.

Der Mikrorechner-Regler 10 besteht im wesentlichen aus einem Mikrorechner 17, an dem über einen parallelen Bus eine Einheit 18 zur Bedienung und Anzeige, sowie Analog-Digital-Umsetzer 12 und ein Digitalausgang 11 angeschlossen sind. Die Analog-Digital-Umsetzer 12 des Mikrorechner-Reglers 10 empfangen über die Meßfühler 13, 14 Meßsignale von dem Druckmeßfühler 8 und den Temperatur meßfühler 9, die im Mikrorechner 17 zur Ermittlung der Überhitzung des Kältemittels und Ermittlung einer Steuergröße für das Stellglied verarbeitet werden. Der Digitalausgang 11 steuert über einen dem Mikrorechner-Regler 10 nachgeschalteten Leistungsverstärker 15 das Magnetventil 6. Durch periodisches Öffnen und Schließen des Magnetventils 6 (Takten) wird die zu verdampfende Kältemittelmenge dosiert, d.h. eine vorgegebene Überhitzung eingehalten.

Das Einhalten einer Mindestüberhitzung hat Vorrang vor einer auf dasselbe Stellglied einwirkenden Raum- oder Kühllufttemperatur-Regelung. Bei Kältemittel-Kreisläufen mit geteiltem Verdampfer und mehreren Magnetventilen wirkt die beschriebene Regelung sinngemäß auf eines oder mehrere der Magnetventile ein.

Für die Betätigung des Stellgliedes (Magnetventil) kann eine feste oder Veränderliche Taktfrequenz vorgesehen sein, innerhalb derer die relative Einschaltdauer variiert wird. Hierdurch ist eine Anpassung an das dynamische Verhalten des Verdampfers als Regelstrecke möglich. Der zu erreichende Überhitzungswert kann im Regler als fester Wert oder als variabler Wert, der abhängig ist von dem mit dem Druckaufnehmer gemessenen Verdampfungsdruck, vorgegeben werden.

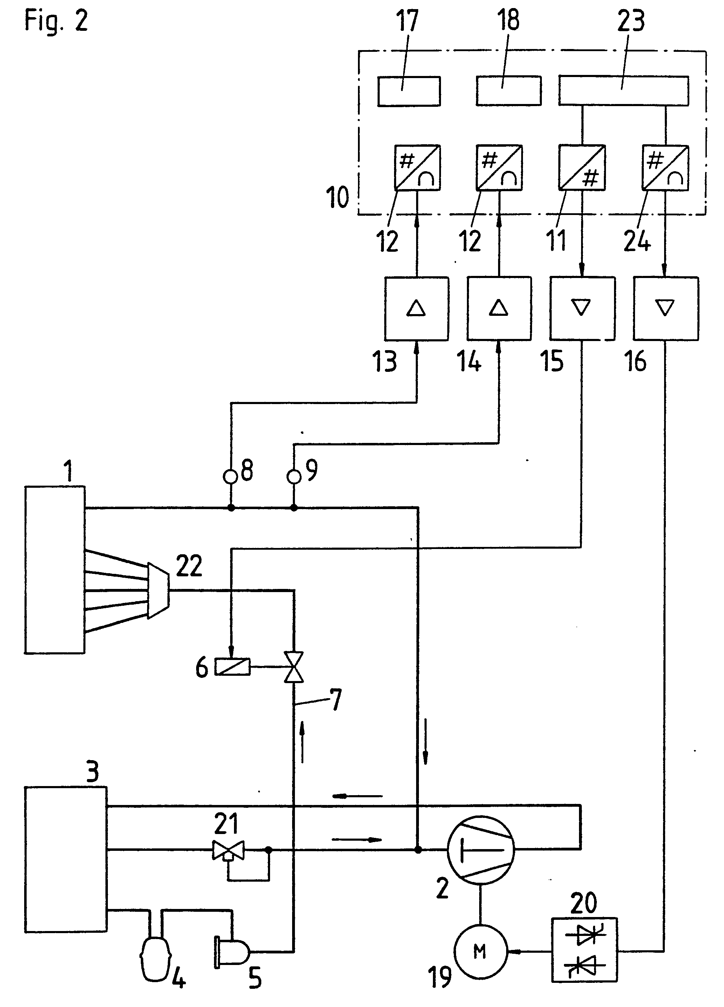

Die Fig. 2 unterscheidet sich von der Fig. 1 durch den hinzugefügten Umrichter 20, den Leistungsverstärkern 16, den Digital-Analog-Umsetzer 24 und die Ausgabeeinheit 23. Über den Digital-Analog-Umsetzer 24 und die Ausgabeeinheit 23 sowie den Leistungsverstärker 16 wird der Umrichter 20 angesteuert, der die Drehzahl des elektrischen Antriebes 19 für den Verdichter 2 steuert.

Allgemein kann man sagen, daß die Überhitzungsregelung auf die Leistungsregelung des Verdichters 2 einwirken soll. Dies kann, wie anhand von Fig. 2 beschrieben, über eine Drehzahlsteuerung für den Antriebsmotor des Verdichters erfolgen. Es können aber auch ein oder mehrere Zylinder des Verdichters oder bei Anlagen mit mehreren Verdichtern können ein oder mehrere Verdichter abgeschaltet werden. Durch die Verminderung des wirksamen Verdichter-Hubvolemens wird eine Mindestüberhitzung erreicht. Das Regeln durch Beeinflussung des Taktens des Stellgliedes (Magnetventil) beschränkt sich auf Betriebszustände wenn das kleinste Verdichter-Hubvolumen bereits erreicht ist.

## Patentansprüche

1. Kälteanlage mit einem Kältemittelkreis mit Verdampfer (1), Verdichter (2), Verflüssiger (3) und Sammler (4) und mit einem Regelkreis zur Überhitzungsregelung des Verdampfers, sowie mit einem Temperaturmeßfühler (9) und einem Druckmeßfühler (8), deren Meßwerte einem Rechenschaltkreis (10) zur Ermittlung einer von der Überhitzung des Kältemittels abhängigen Steuergröße zugeleitet werden, und diese Steuergröße auf mindestens ein Überhitzungs-Stellglied (6) derart einwirkt, daß die Durchlaßmenge des Kühlmittels in Abhängigkeit von dem Überhitzungswert geregelt wird, dadurch gekennzeichnet, daß ein in einem Leistungsregelkreis des Verdichters vorgesehenes Leistungs-Stellglied (20) gegenüber dem zwischen Verflüssiger (3) und einem Verteiler (22) des Verdampfers (1) eingeschalteten Überhitzungs-Stellglied (6) derart bevorrechtigt geschaltet ist, daß das Leistungsstellglied (20) mit der Steuergröße beaufschlagt wird und erst bei Erreichen des unteren Bereiches der Leistungsbeeinflußung des Verdichters (2) das Überhitzungs-Stellglied (6) die Kälteanlage in Abhängigkeit von den zwischen Verdampfer (1) und Verdichter (2) auf der Saugseite des Verdichters angeordneten Druck- und Temperaturmeßfühlern (9) regelt.

2. Kälteanlage nach Anspruch 1, dadurch gekennzeichnet, daß durch periodisches Öffnen und Schließen (Takten) des Überhitzungs-Stellgliedes (6) die Durchflußmenge des Kühlmittels zum Erreichen der vorgegebenen Überhitzung eingeregelt wird.

3. Kälteanlage nach Anspruch 1, dadurch gekennzeichnet, daß das Überhitzung-Stellglied (6) als Magnetventil ausgebildet ist, das innerhalb einer vorgegebenen festen oder variablen Taktfrequenz mit variabler Einschaltdauer periodisch öffnet und schließt.

4. Kälteanlage nach Anspruch 3, dadurch gekennzeichnet, daß das Leistungs-Stellglied (z. B. Umrichter (20)) den elektrischen Antrieb (19) des Verdichters (2) beeinflußt.

5. Kälteanlage nach Anspruch 4 mit einem mehrere Zylinder aufweisenden Verdichter, dadurch gekennzeichnet, daß das Leistungs-Stellglied das Zu- und Abschalten einzelner Zylinder in Abhängigkeit von dem Überhitzungswert steuert.

6. Kälteanlage nach Anspruch 4 mit mehreren parallel arbeitenden Verdichtern, dadurch gekennzeichnet, daß das Leistungs-Stellglied (20) das Zu- und Abschalten einzelner Verdichter in Abhängigkeit von dem Überhitzungswert steuert.

7. Kälteanlage nach einem der Ansprüche 3 bis 6, dadurch gekennzeichnet, daß die Regelung in Abhängigkeit von der Kühllufttemperatur bzw. in Abhängigkeit von der Raumtemperatur auf mindestens ein Überhitzungsglied und ein Leistungs-Stellglied einwirkt, wobei das Einhalten der Mindest-Überhitzung vor der Kühlluftregelung bevorrechtigt ist.

## Claims

1. Refrigerating system having a refrigerant circuit with evaporator (1), compressor (2), condenser (3) and collector (4) and having a control loop for controlling the overheating of the evaporator, and having a temperature sensor (9) and a pressure sensor (8), the measurement values of which are fed to an arithmetic circuit (10) for determining a control variable which depends on the overheating of the refrigerant, and this control variable acts on at least one overheating actuator (6) in such a manner that the flow rate of the refrigerant is controlled in dependence on the overheating value, characterized in that a power actuator (20) provided in a power control loop of the compressor is switched with priority over the overheating actuator (6) inserted between condenser (3) and a distributor (22) of the evaporator (1), in such a manner that the control variable is applied to the power actuator (20), and the overheating actuator (6) controls the refrigerating system in dependence on the pressure and temperature sensors (8, 9) arranged on the intake side of the compressor between evaporator (1) and compressor (2) only when the lower range of the influence on the power of the compressor (2) is reached.

2. Refrigerating system according to Claim 1, characterized in that the flow rate of the refrigerant is adjusted to reach the predetermined overheating by periodically opening and closing (cycling) the overheating actuator (6).

3. Refrigerating system according to Claim 1, characterized in that the overheating actuator (6) is constructed as a solenoid valve which periodically opens and closes with a variable duty cycle within a predetermined fixed or variable cycle frequency.

4. Refrigerating system according to Claim 3, characterized in that the power actuator (for example converter (20)) influences the electric drive (19) of the compressor (2).

5. Refrigerating system according to Claim 4, having a compressor exhibiting several cylinders, characterized in that the power actuator controls the connection and disconnection of individual cylinders in dependence on the overheating value.

6. Refrigerating system according to Claim 4, having several compressors operating in parallel, characterized in that the power actuator (20) controls the connection and disconnection of individual compressors in dependence on the overheating value.

7. Refrigerating system according to one of Claims 3 to 6, characterized in that the control system acts on at least one overheating element and one power actuator in dependence on the cooling air temperature and in dependence on the room temperature, priority being given to the maintenance of the minimum overheating before the cooling air control.

## Revendications

1. Installation de refroidissement comprenant un circuit de moyen de refroidissement avec un évaporateur (1), un compresseur (2), un condenseur (3), un collecteur (4) et un circuit de réglage pour le réglage de surchauffe de l'évaporateur, ainsi qu'un capteur (9) pour mesurer la température et un capteur (8) pour mesurer la pression, dont les valeurs de mesures sont amenées vers un circuit de calcul (10) pour déterminer une grandeur de contrôle qui dépend de la surchauffe du moyen de refroidissement, et cette grandeur de contrôle agissant au moins sur un organe de réglage de surchauffe de telle sorte que le débit du moyen de refroidissement peut être réglé en fonction de la valeur de surchauffe, caractérisée en ce que un organe de réglage de performance (20) prévu dans un circuit de réglage de performance du compresseur, est branché de façon privilégiée face à l'organe de réglage de surchauffe (6) branché entre le condenseur (3) et un distributeur (22) de l'évaporateur (1) de telle sorte qu'à l'organe de réglage de performance (20) est fourni la grandeur de contrôle et seulement lorsque la zone inférieure de réglage de performance du compresseur (2) est atteinte, l'organe de réglage de surchauffe (6) règle l'installation de refroidissement en fonction des capteurs de mesure de pression et de température disposés sur la face de succion du compresseur entre l'évaporateur (1) et le compresseur (2).

2. Installation de refroidissement suivant la revendication 1, caractérisée en ce que le débit du moyen de refroidissement est établi à l'aide d'ouverture et de fermeture périodique (cycle) de l'organe de réglage de surchauffe (6) pour atteindre une surchauffe prédéterminée.

3. Installation de refroidissement suivant la revendication 1, caractérisée en ce que l'organe de réglage de surchauffe (6) est formé par une soupape magnétique, qui s'ouvre et se ferme périodique ment endéans une fréquence d'horloge prédéterminée qui est fixe ou variable et qui possède une durée de branchement variable.

4. Installation de refroidissement suivant la revendication 3, caractérisée en ce que l'organe de réglage de performance (par exemple un mutateur) influence l'entraînement électrique (19) du compresseur (2).

5. Installation de refroidissement suivant la revendication 4, comportant un compresseur avec plusieurs cylindres, caractérisée en ce que l'organe de réglage de performance contrôle le branchement et le débranchement des cylindres individuels en fonction de la valeur de surchauffe.

6. Installation de refroidissement suivant la revendication 4, comportant plusieurs compresseurs fonctionnant en parallèle, caractérisée en ce que l'organe de réglage de performance (20) contrôle le branchement et le débranchement des compresseurs individuels en fonction de la valeur de surchauffe.

7. Installation de refroidissement suivant l'une des revendications 3 à 6, caractérisée en ce que le réglage en fonction de la température de l'air de refroidissement respectivement en fonction de la température ambiante s'applique sur au moins un organe de surchauffe et un organe de réglage de performance, et où le maintien de la surchauffe minimale du réglage de l'air de refroidissement est avantagé.

Fig.1

Fig. 2